# EUROPEAN PATENT SPECIFICATION

(11) **EP 1 435 681 B1**
(45) Date of publication and mention of the grant of the patent: **14.04.2010**
(21) Application number: 03380298.4
(22) Date of filing: 18.12.2003
(51) Int. Cl.: H02B 7/08

(54) **Transformer centre for underground networks**
Umspannstation für unterirdische Energieverteilungsnetze
Poste de transformation pour réseaux souterrains

(30) Priority: 26.12.2002 ES 200203010
(43) Date of publication of application: 07.07.2004
(73) Proprietor: PREFABRICADOS UNIBLOK,S.L.U., 45223 Seseña Toledo (ES)
(72) Inventor: Ormazabal Ocerin, Javier, 48011 Bilbao(Vizcaya) (ES)
(74) Representative: Carpintero Lopez, Francisco

(56) References cited:
- DE-A- 2 432 055
- DE-A- 3 110 335
- DE-U- 1 904 754
- DE-U- 1 964 787
- DE-U- 7 223 445
- DE-U- 29 612 083
- US-A- 2 952 799
- US-A- 3 832 605

## Description

### PURPOSE OF THE INVENTION

The present invention refers to a transformer centre designed for underground networks in urban areas that have a high level of electrical consumption.

The transformer centre is among those known as underground and it is capable of housing in its interior up to two transformers with their low tension panels and the corresponding medium voltage switchgear for loop operation and operation and protection of each of the transformers.

### BACKGROUND TO THE INVENTION

Transformer centres are generally made up of a transformer, medium voltage switchgear and a low voltage panel. With the purpose of minimizing the urban impact of the transformer centres, centres were developed whose main characteristic resides in that are underground, that is, the building that contains it is below the level of the ground and only the roof of the centre emerges at the surface, and at this same level.

In spite of civil works continuing to be used for the construction of underground centres, a common way of completing these buildings is that of fabricating them based on two parts:
- A main structure that consists of the floor and side walls of the building
- A roof that closes the main structure on its upper part and that contains manholes for personnel access and for the introduction / extraction of medium and low voltage equipment. Also, appliances that allow the vertical ventilation of the transformer centre are positioned on the roof.

Example of this class of centre can be found in the patents ES 1049753 and ES 2157770.

A third manner of construction is the construction in a single structure, that is, floors, walls and roof, leaving only the openings in the roof for the placing of the personnel and material access manholes.

However, the ever increasing greater unit demand for electrical power in homes, the shortage of premises and ground, as well as the difficulty of undertaking works in urban areas, obliges, on one hand, planning transformer centres capable of housing equipment of greater power, and/or planning transformer centres that allow their expansion by means of the incorporation of a second transformer at the time that the demand makes it necessary.

Although underground transformer centres for two transformers exist, in some constructions these are placed on the same side of the transformer centre, parallel to each other, because of which the centre acquires a significent width that can oblige its transport in special convoys. The constructions in those cases that, in order to avoid the above-mentioned situation, the transformers are installed one after the other, for example FR 2266963, hinder access to the back transformer in the event of the need to change the adjustment taps. Thus, if it is necessary to change the adjustment taps of the back transformer, both transformers must be disconnected in order to be able to enter into the enclosure without danger of electrocution.

A characteristic of the underground transformer centres resides in that they have to be able to support the incidental passing of vehicles. This obligates that the manholes have structural characteristics that allows them to tolerate said mechanical demands. Traditionally this problem has been solved by including a metallic frame welded to the ironwork of the roof, in such a way that the stress is distributed over all the framework of the roof. This way of fabricating the roof makes its manufacturing process slow and therefore expensive.

In addition and since the roof of these centres is also buried, except for its upper face, in the event of an eventual rupture or cracking of the cover, this should be replaced to avoid, for example, complete rupture due to the passing of a vehicle. The substitution of the cover would entail damage to the surrounding urban area in order to be able to extract it.

Finally, it is important to minimize the height of the underground transformer centres since it entails lesser excavation, with the consequent advantages that this provides. At present, as can be seen in the patent application ES 2157770, the floor on which the operative works is formed by a concrete slab, under which the medium voltage cables are suspended. The access to that area of the transformer centre is through hinged trapdoor or withdrawable cover. With the purpose of being able to carry out the suspension and handling of the cables through those trapdoors, the height of the cable ducts must be ample due to the difficulty of access and of working.

The transformer centre, object of the invention, is designed with the purpose of housing the medium voltage switchgear for loop operation, two distribution transformers, with their medium voltage switchgear, for their operation and protection, as well as their low voltage panels. Furthermore, and given its special closing configuration, the replacement of the roof can be carried out without damaging the surrounding urban area. A characteristic of the new closure, with the purpose of minimizing the cost of the centre, is the design of the new closure that allows the metallic framework to be disposed of, while maintaining the necessary mechanical strength. It has also been possible to reduce the necessary height for the suspension of cables, a centre of lesser height, weight and needing a lesser excavation for its installation, being achieved in this way. Finally, the positioning of the two transformers at the sides allows effective cooling of each of them and direct access to the transformers adjustment taps.

The following documents refer to transformer centres: DE-U-1904754, US-2952799 and DE-U-1964787.

The aim of the present invention is achieved by an underground transformer center comprising the features of claim 1.

### DESCRIPTION OF THE INVENTION

The prefabricated single block, underground transformer centre, subject of the present invention, is formed by an upper roof made up of three reinforced concrete slabs. Said slabs rest on the inside of the main structure of the centre, in such a way that only the main structure of the building maintains in contact with the ground in which it is buried. This allows that in the event of rupture or damage of the only part of the building accessible, the roof, this can be modified without damage being caused to the urban area around the centre. At the join between concrete slabs a joint is placed that allows the watertightness of the seal to be assured. The slabs are positioned so that the centre one rests on the central structure, whereas the two sides rest on the main structure and on the central slab.

In the central slab there are also two manholes one for the operatives' access and the other for the introduction/extraction of the medium and low voltage switchgear. This latter, like the side slabs, lacks a metallic frame. A joint assures the watertightness of the seal between the manhole and central slab.

Obviously, instead of joints to ensure watertightness of the seal of the transformer centre, sealing paste could be used, such as, for example, an epoxide or polyurethane putty.

With the aim of minimizing the height of the transformer centre, and therefore the necessary excavation to house the building, its floor includes a number of projections or props for supporting of a number of flat panels that serve as a floor for the personnel working area. This paneled and removable floor can be removed for more convenient suspension of the cables. With the cable suspension area completely accessible, it is no longer necessary for this ducting to be very deep in order to be able, using trapdoors in the floor, to handle the cables during their suspension or repair.

The possibility of installing two transformers, each of them in a side of the centre, allows the first to be initially installed, and only when the load requires it, the second to be installed. This layout, one separated from the other, makes both of them practically independent, so that the installation of the second transformer can be carried out without doing any live works and without interrupting service of the first transformer, except at the moment of connecting the operating and protection medium voltage switchgear of the new transformer.

Given the layout of the two transformers two independent ventilation circuits have been configured for the cooling of each of the transformers. In the event of vertical ventilation, this is performed using stacks. The input of cold air is carried out through the central stacks and outlet of the hot air through the side stacks. In the case of horizontal ventilation, cold air input is carried out using a horizontal cowling placed in the facing of the building and at ground level, while the warm air outlet is carried out through the side cowlings, also at ground level.

The layout of the transformers in the sides allows the possibility of replacing the second transformer and low voltage panel by medium voltage switchgear, maintaining the handling space requirements necessary in front of the switchgear. In this way, an underground transformer centre with the possibility of multiple electrical set-ups, is made available. In order to be able to carry out this substitution, the mould of the centre is formed so that the floor of the second transformer may be modified and converted into one suitable for installing the medium voltage switchgear and the paneled operatives' work floor.

### DESCRIPTION OF THE DRAWINGS

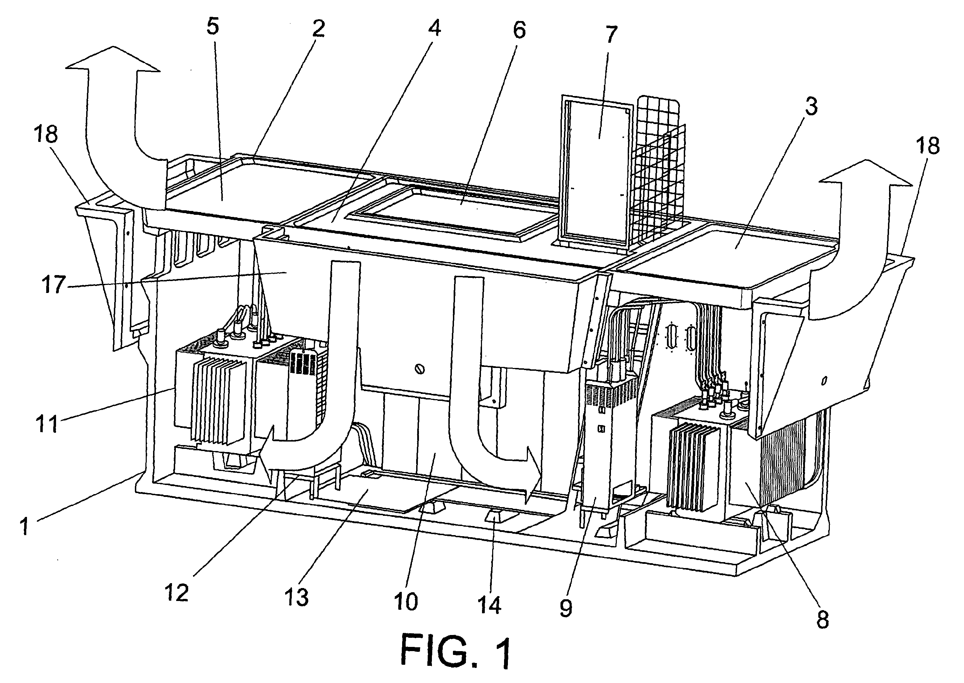

Figure 1. - Shows the transformer centre with two transformers (8 and 11) and horizontal ventilation (17 and 18). In the figure the props (14), that support the floor (13), on which that the operatives work and that delimits the cable suspension ducting, can be seen. Also the direction of air flow has been shown, by means of arrows, for the cooling of the transformer centre.

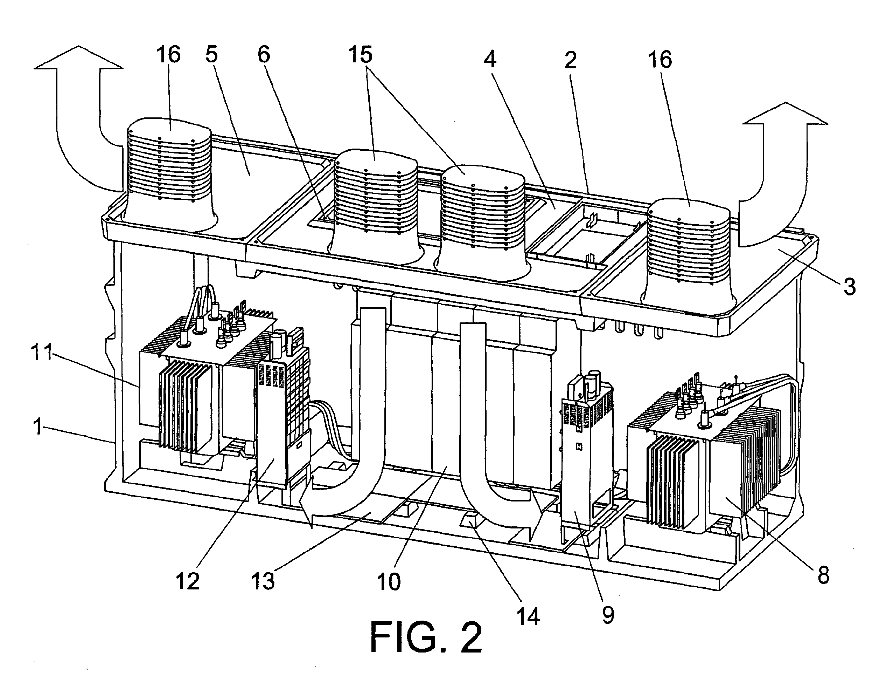

Figure 2. - Shows the transformer centre with two transformers (8 and 11) and vertical ventilation (15 and 16). Again, the arrows show the direction of air flow for cooling of the transformer centre.

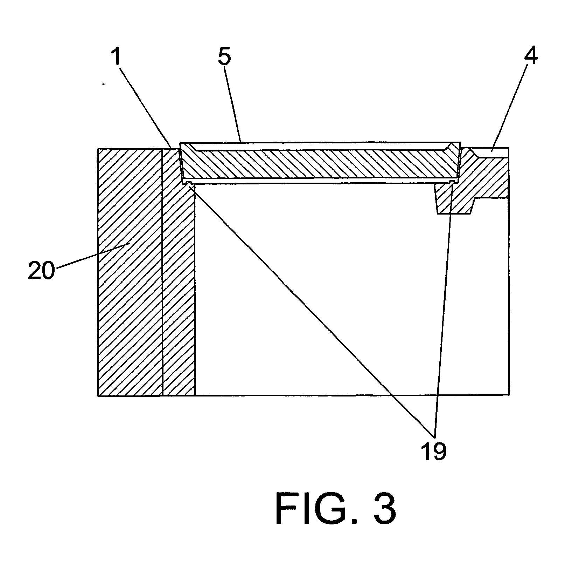

Figure 3. - Shows a detail of the transformer centre within the ground (20) and the closing of the upper roof (2) with the main structure (1). Specifically, the closure of the slab (5), corresponding to the second transformer (11), against the main structure of the centre (1) and the central slab (4), has been shown.

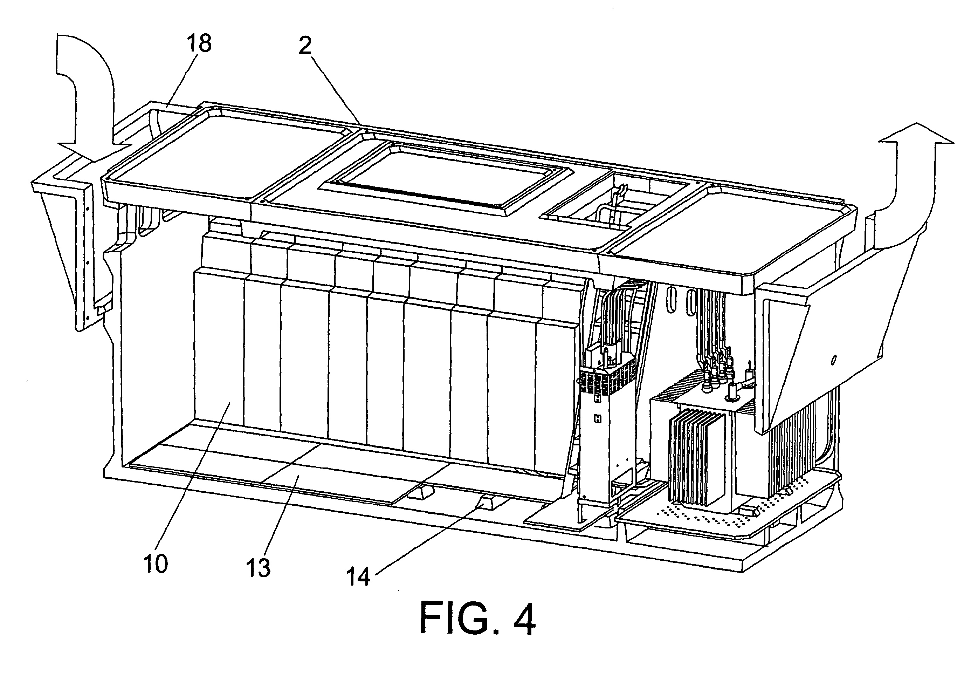

Figure 4. - Shows the transformer centre with horizontal ventilation with an single transformer (8) and an extension of the medium voltage switchgear (10). In this occasion, the central ventilation cowling (17) is not necessary, and the intake of cold air is carried out through the cowling (18) located at the opposite end from the transformer (8).

### PREFERABLE EMBODIMENT OF THE INVENTION

In accordance with figure 1, the transformer centre proposed comprises a main structure (1) and a roof (2). Said roof (2) is formed by three slabs, slab (3) of the first transformer (8), the central slab (4) and slab (5) corresponding to the second transformer (11).

As is shown in figure 3, the main structure (1) of the transformer centre remains within the ground (20), while the slabs (3, 4 and 5) that form the roof (2) only maintain contact with the main structure (1). Slab (5) corresponding to the second transformer (11) fits in the main structure (1) and ensures the watertightness of the seal by means of the joint (19). The other side support of the slab (5) is made against the central slab (4) and the joint (19). The central cover (4) only rests on the front and back part of the main structure (1) and it serves as a side support for slabs (3) and (5).

In accordance with figure 1, in the floor of the transformer centre a number of props (14), that serve as a support for the removable floor tiles (13) that allows access to the cable suspension area during the fitting-out of the transformer centre, are placed.

The layout of the equipment within the transformer centre allows the first transformer (8) to be installed in a first phase, along with its low voltage panel of (9) and the medium voltage switchgear (10). A later extension of the centre would imply the installation of the second transformer (11) and its low voltage panel (12). When the new material is being introduced through the cover (5), it is not necessary for safety to disconnect the first transformer (8), because of which it is possible to maintain electrical service of this transformer during the expansion operations. It would only be necessary to interrupt this service in the case of having to enlarge the medium voltage switchgear (10) to include the protection and operation of the second transformer (11).

The cooling of the transformer centre, with the layout of the transformers in the sides of the centre, is achieved through the central horizontal ventilation (17), because of which the cold air penetrates into the interior, diverting into two different flows toward the side cowlings (18). By means of baffles, not shown in the figure, the flow of the air is forced to pass below the transformers (8 and 11) to be diverted towards the outlets (18).

## Claims

1. Underground transformer centre **characterised in that** the upper roof (2) is formed by several independent slabs and all of it is seated, without projecting sideways, within the main structure (1) of the transformer centre.

2. Underground transformer centre according to claim 1 **characterized in that** the main structure of the centre (1) is of the single-block prefabricated type.

3. Underground transformer centre according to claim 1, **characterized in that** the roof (2) is formed by three slabs (3, 4 and 5), the central slab (4) serving as support for the side slabs (3 and 5).

4. Underground transformer centre according to claim 3, **characterized in that** the support between slabs (3-4, 4-5), slab - main structure (1-3, 1-4, 1-5) and slab - cover switchgear (4-6) is carried out without the need of metallic framework.

5. Underground transformer centre according to claim 4, **characterized in that** the watertightness between slabs is achieved using joints (19).

6. Underground transformer centre according to claim 1 **characterised in that** there are a number of props (14) in its floor, to support a flat false floor that is removable in panels (13).

7. Underground transformer centre according to claim 6, **characterized in that** the props (14) are obtained directly from the mould of the main structure (1).

8. Underground transformer centre according to claim 1 **characterised in that** two transformers (8, 11) can be placed in each of the side ends of the centre.

9. Underground transformer centre according to claim 8, **characterized in that** it has two independent ventilation circuits with non-coinciding directions of circulation.

10. Underground transformer centre according to claim 9, **characterized in that** the ventilation is due to the natural circulation of the air inside the centre.

11. Underground transformer centre according to claim 8, **characterized in that** the second transformer (11) can be replaced with medium voltage switchgear (10).

12. Underground transformer centre according to claims 4, 5, 7 and 10, **characterized in that** the centre is of internal operation.

## Patentansprüche

1. Unterirdische Umspannstation, **dadurch gekennzeichnet, dass** das Dach (2) aus zahlreichen unabhängigen Platten ausgebildet ist, die allesamt ohne seitlichen Überstand in dem Tragwerk (1) der Umspannstation ruhen.

2. Unterirdische Umspannstation nach Anspruch 1, **dadurch gekennzeichnet, dass** das Tragwerk (1) der Station vom Typ eines vorgefertigten einzelnen Blockes ist.

3. Unterirdische Umspannstation nach Anspruch 1, **dadurch gekennzeichnet, dass** das Dach (2) aus drei Platten (3, 4 und 5) besteht, wobei die zentrale Platte (4) als Auflager für die Platten (3 und 5) dient.

4. Unterirdische Umspannstation nach Anspruch 3, **dadurch gekennzeichnet, dass** das Auflager zwischen den Platten (3-4, 4-5), Platte - Tragwerk (1-3, 1-4, 1-5) und Platte - Abdeckung Schaltanlage (4-6) ohne das Erfordernis eines Metallrahmenwerks ausgeführt ist.

5. Unterirdische Umspannstation nach Anspruch 4, **dadurch gekennzeichnet, dass** die Wasserdichtigkeit zwischen den Platten mit Hilfe von Passfugen erreicht wird.

6. Unterirdische Umspannstation nach Anspruch 1, **dadurch gekennzeichnet, dass** es eine Anzahl von Streben (14) in deren Boden gibt, die einen flachen Fehlboden tragen, der in Paneelen (13) lösbar ist.

7. Unterirdische Umspannstation nach Anspruch 6, **dadurch gekennzeichnet, dass** die Streben (14) direkt aus dem Formteil des Tragwerks (1) gewonnen wwerden.

8. Unterirdische Umspannstation nach Anspruch 1, **dadurch gekennzeichnet, dass** zwei Transformatoren (8, 11) an beiden Seitenden der Station angeordnet sein können.

9. Unterirdische Umspannstation nach Anspruch 8, **dadurch gekennzeichnet, dass** sie zwei unabhängige Belüftungskreisläufe mit nicht übereinstimmenden Umwälzrichtungen hat.

10. Unterirdische Umspannstation nach Anspruch 9, **dadurch gekennzeichnet, dass** die Belüftung durch die natürliche Umwälzung innerhalb der Station erfolgt.

11. Unterirdische Umspannstation nach Anspruch 8, **dadurch gekennzeichnet, dass** der zweite Transformator (11) durch eine Mittelspannungsschaltanlage (10) ersetzt sein kann.

12. Unterirdische Umspannstation nach Anspruch 4, 5, 7 und 10, **dadurch gekennzeichnet, dass** die Station intern arbeitet.

## Revendications

1. Poste de transformateur souterrain,
**caractérisé en ce que**
le toit (2) est formé de plusieurs dalles indépendantes et toutes sont encastrées sans bordure en relief dans la structure principale (1) du poste de transformateur.

2. Poste de transformateur souterrain selon la revendication 1,
**caractérisé en ce que**
la structure principale du poste (1) est un monobloc préfabriqué.

3. Poste de transformateur souterrain selon la revendication 1,
**caractérisé en ce que**
le toit (2) est formé de trois dalles (3, 4, 5), la dalle centrale (4) servant de support aux dalles latérales (3 et 5).

4. Poste de transformateur souterrain selon la revendication 3,
**caractérisé en ce que**
le support entre les dalles (3-4, 4-5), le support entre la dalle et la structure principale (1-3, 1-4, 1-5) et entre la dalle et le capot du commutateur de prise (4-6), est fait sans châssis métallique.

5. Poste de transformateur souterrain selon la revendication 4,
**caractérisé en ce que**
l'étanchéité des dalles est assurée par des joints (19).

6. Poste de transformateur souterrain selon la revendication 1,
**caractérisé en ce que**
le fond comporte un certain nombre de bossages (14) pour soutenir un faux plancher plat amovible, sous forme de panneaux (13).

7. Poste de transformateur souterrain selon la revendication 6,
**caractérisé en ce que**
les bossages (14) sont réalisés directement par moulage de la structure principale (1).

8. Poste de transformateur souterrain selon la revendication 1,
**caractérisé en ce que**
deux transformateurs (8, 11) sont placés de chaque côté par rapport au milieu.

9. Poste de transformateur souterrain selon la revendication 8,
**caractérisé en ce qu'**
il comporte deux circuits de ventilation indépendants, avec des directions de circulation qui ne coïncident pas.

10. Poste de transformateur souterrain selon la revendication 9,
**caractérisé en ce que**
la ventilation est assurée par la circulation naturelle de l'air à l'intérieur du poste.

11. Poste de transformateur souterrain selon la revendication 8,
**caractérisé en ce que**
le second transformateur (11) peut être remplacé par un commutateur de tension moyenne (10).

12. Poste de transformateur souterrain selon l'une des revendications 4, 5, 7 et 10,
**caractérisé en ce que**
le poste fonctionne de manière interne.
